# EUROPEAN PATENT SPECIFICATION

(11) **EP 0 419 171 B1**
(45) Date of publication and mention of the grant of the patent: **18.11.1993**
(21) Application number: 90310128.5
(22) Date of filing: 17.09.1990
(51) Int. Cl.: F16D 51/50, F16D 65/22, F16D 65/56, F16D 51/20, F16D 65/08

(54) **Drum brake with servo parking brake function**
Trommelbremse mit Servo-Feststellbremsen-Funktion
Frein à tambour à servo-fonction du frein de stationnement

(30) Priority: 18.09.1989 US 408857
(43) Date of publication of application: 27.03.1991
(73) Proprietor: KELSEY-HAYES COMPANY, Romulus, Michigan 48174 (US)
(72) Inventor: Evans, Anthony Colin, Northville, Michigan 48174 (US)
(74) Representative: Blanco White, Henry Nicholas

(56) References cited:
- EP-A- 0 171 222
- GB-A- 725 402
- GB-A- 1 111 644
- GB-A- 1 314 230
- US-A- 3 708 044
- US-A- 3 709 334
- US-A- 3 941 218
- US-A- 4 401 195

## Description

### BACKGROUND TO THE INVENTION

This invention relates to a drum brake assembly wherein the service brake acts as a leading/trailing brake and the parking or emergency brake acts as a duo-servo brake, that is, a brake in which the two brake shoes co-operate to generate a servo action.

Such a drum brake assembly is shown in AU-A-516048 in which a lever is mounted on one of the brake shoes for pivoting in a plane generally parallel to a backing plate of the brake assembly and two struts each extend between a respective end of the lever and the other brake shoe, or a component carried thereon, to generate a duo-servo action when a parking/emergency braking function is operated. Whilst this brake assembly operates satisfactorily it is relatively cumbersome in its parking/ emergency function and its method of mounting of the pivoting lever.

### SUMMARY OF THE INVENTION

It is an object of the present invention to provide an improved form of drum brake with a service braking function which acts as a leading/trailing brake and the parking or emergency brake function which acts as a duo-servo brake.

Thus according to the present invention there is provided a drum brake assembly having a leading/trailing service brake and a duo-servo parking and emergency brake, the brake assembly comprising a backing plate, first and second opposed arcuate brake shoes supported relative to said backing plate and movable outwardly into frictional engagement with an associated brake drum upon actuation of either the service brake or the parking and emergency brake, an hydraulic actuator secured relative to said backing plate and disposed between and engageable with a first pair of adjacent ends of said brake shoes for hydraulically actuating the service brake, a rotation preventing abutment secured relative to said backing plate and disposed between and engageable with a second pair of adjacent ends of said brake shoes, each of said first and second brake shoes including an arcuate table for supporting a friction pad and a web connected to said table, a pivot lever pivotally supported relative to said first brake shoe and operatively coupled to exert an outward force on said first brake shoe when the parking and emergency brake is mechanically actuated, strut means disposed adjacent said hydraulic actuator and including one end coupled to said second brake shoe and an opposite end coupled to one end of said pivot lever, parking and emergency brake actuating means carried by said brake assembly for mechanically actuating said pivot lever to urge said first brake shoe outwardly into engagement with the brake drum and thereby initiating duo-servo actuation of the parking and emergency brake through said strut means, and hold down means for securing said first brake shoe to said backing plate, characterised in that said hold down means also pivotally secures said pivot lever to said web of said first brake shoe.

### BRIEF DESCRIPTION OF THE DRAWINGS

One embodiment of the present invention will now be described, by way of example, with reference to the accompanying drawings in which:
Figure 1 is an outboard elevational view of a drum brake assembly constructed in accordance with the invention;
Figure 2 is an exploded pictorial view of various parts of the drum brake assembly of Figure 1;
Figure 3 is a sectional view taken along line 3-3 of Figure 1;
Figure 4 is a pictorial view of the left-hand brake shoe of Figures 1 and 2 with a lever member pivotally mounted upon the web thereof in accordance with the invention;
Figure 5 is a pictorial view of the various parts of the drum brake assembly of Figures 1 and 2;
Figures 6-10 are schematic views of various parts of the drum brake assembly of Figure 1, showing different positions thereof under various operating conditions, and
Figure 11 is a view, partially in section, taken along line 11-11 of Figure 1.

### DETAILED DESCRIPTION OF THE PREFERRED EMBODIMENT

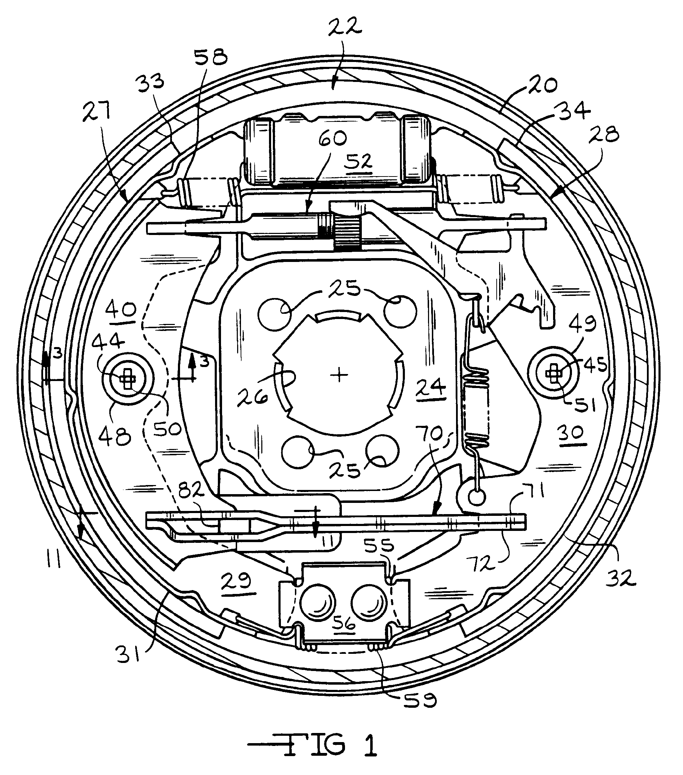

With reference to the drawings, Figure 1 represents an outboard vertical sectional view through a typical leading/trailing drum brake assembly 22 for the right rear wheel of an automotive vehicle constructed in accordance with the present invention. A backing plate 24 for the brake assembly 22 typically has four holes 25, for mounting the plate on the vehicle frame (not shown) by four bolts (not shown) and a hole 26 for receiving a typical axle or spring (not shown).

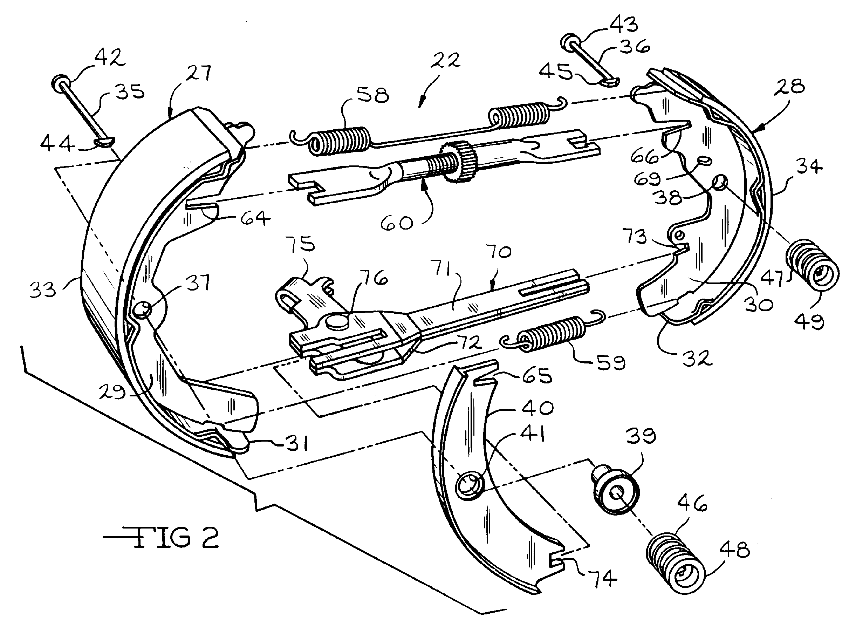

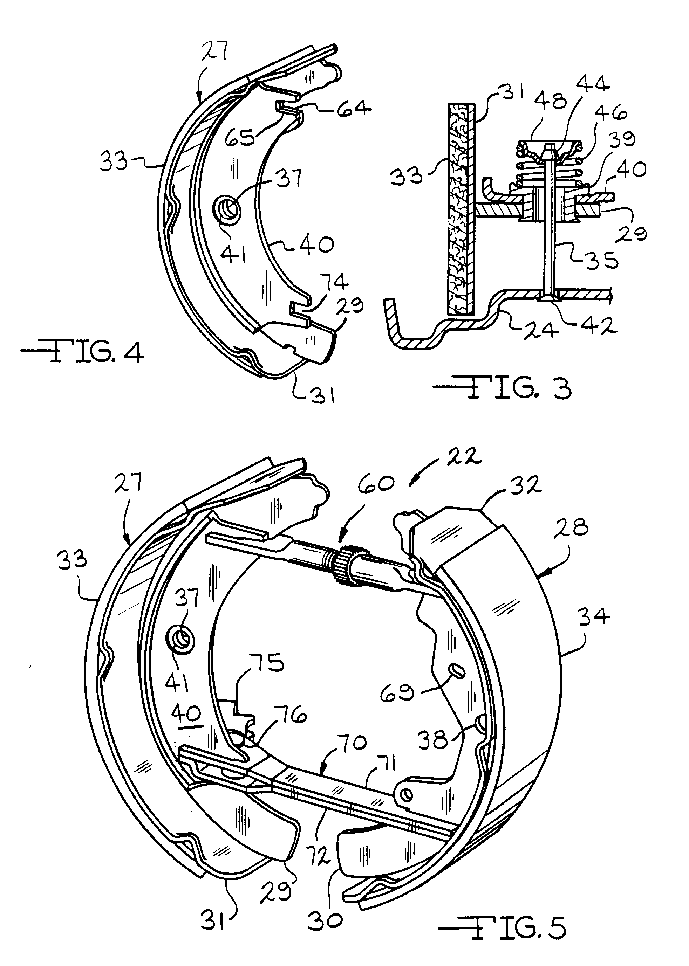

With reference to Figures 1-5, brake assembly 22 includes a first brake shoe 27 and an oppositely disposed second brake shoe 28 respectively having arcuate webs 29 and 30 with tables 31 and 32 having affixed thereto arcuate friction pads 33 and 34. Brake shoes 27 and 28 are typically affixed to the backing plate 24 respectively by a pair of pins 35 and 36 (Figure 2) extending through holes 37 and 38 in webs 29 and 30, holes 37 and 38 being located substantially at the mid-point between the ends of the shoes. Pin 35 also extends through a hollow rivet or hinge pin 39 by which lever 40 of the parking brake mechanism is pivotally connected to web 29. The rivet 39 extends through a hole 41 in the lever 40 and through the hole 37.

The pins 35 and 36 respectively have enlarged heads 42 and 43 retained on the inboard side of the backing plate 24 and flattened, wedge-shaped ends 44 and 45. The pins 35 and 36 also pass through compression springs 46 and 47 and through flanged-cup retainers 48 and 49. The retainer cups are provided with a pair of slots 50 and 51 through which the flattened ends 44 and 45 are passed and then turned ninety degrees while the spring 46 and 47 are compressed, thereby securing the brake shoe assemblies 27 and 28 to backing plate 24.

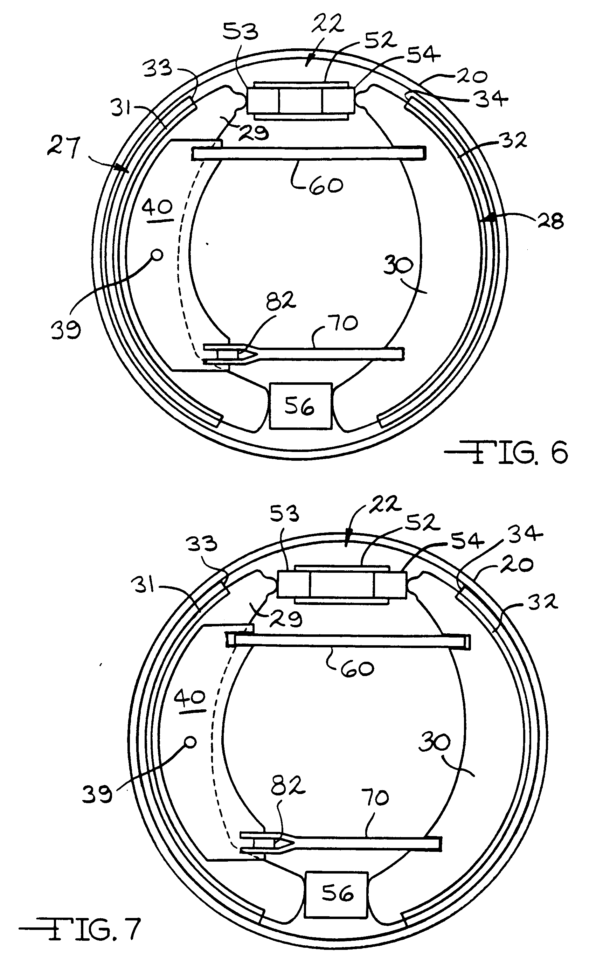

An hydraulic actuator 52 (Figure 1) is provided on backing plate 24 between the upper ends of brake shoe webs 29 and 30. Actuator 52 typically includes a pair of pistons 53 and 54 (shown schematically in Figures 6-10) outwardly movable from opposite ends of the actuator upon increase in pressure of hydraulic fluid thereby forcing the brake shoe assemblies into frictional engagement with brake drum 20.

An abutment block 56 positioned between brake shoe webs 29 and 30 acting in concert with the hydraulic actuator 52 transfers all braking torque to the vehicle frame via the backing plate 24.

A brake shoe retracting spring 58 adjacent the actuator 52 engages brake webs 29 and 30 and biases the upper end portions of the webs 29 and 30 against pistons 53 and 54 respectively. Similarly, a brake shoe retracting spring 59 adjacent the block 56 biases webs 29 and 30 into engagement with the block 56.

Below tension spring 58 a first composite expansible strut 60, shown schematically in Figures 6-10 as a one-piece member, is operatively associated at one end with web 29 and lever 40 and at the opposite end with web 30. The composite strut 60 serves as part of the duo-servo parking brake mechanism and also as part of a typical automatic brake adjusting mechanism more fully described in US Patent No. 4,401,195, issued to Larry L. Last on August 30th, 1983. A bifurcated end of strut 60 is operatively associated with web 29 at notch 64 therein, with the lever 40 at notch 65 therein and web 30 at notch 66 therein.

The duo-servo parking or emergency brake mechanism includes a second composite strut 70, shown schematically in Figures 6-10 as a one-piece member, but including an upper part 71 and a lower part 72 welded together. A bifurcated end of composite strut 70 operatively engages web 30 at notch 73 therein and an opposite bifurcated end of link 70 embraces a lower portion of web 29 and engages with the lever 40 at notch 74 therein (see Figures 2 and 11). At the end of composite link 70 adjacent web 29 and lever 40, the elements 71 and 72 are offset from each other to provide a space for a brake actuating lever 75 which is pivotally mounted therein on a pin 76. As shown in Figure 11, a brake operating cable 77 having a stop 78 on the end thereof engages end 79 of actuating lever 75. Lever return spring 80 is provided on the cable between lever 75 and a portion 81 of backing plate 24, thereby biasing lever 75 to the inoperative position. An end 82 of the lever 75 operatively engages notch 74 of lever 40.

With reference to Figures 6-10, Figure 6 shows the relative positions of the various parts of drum brake assembly 22 with neither the hydraulic service brake nor the mechanical parking brake applied.

Figure 7 shows the relative positions with the hydraulic service brake applied. The pistons 53 and 54 are extended outward from their normal retracted positions in actuator 52, and friction pads 33 and 34 are in braking engagement with brake drum 20. Both webs 29 and 30 are in abutting engagement with the stop 56 under a leading/trailing brake action.

In Figure 8, the mechanical parking brake is shown as being applied while the hydraulic service brake is activated. Pistons 53 and 54 are in their extended positions and the end 82 of the lever 75 has moved against lever 40 thereby pivoting lever 40 clockwise into solid engagement with the adjusting strut 60 from its position in Figure 7. This moves the strut 60 into solid engagement with web 30. Further movement of the lever end 82 thus translates lever 40 towards the left and also moves the lower end of the web 29 towards the left by means of the pivotal connection between the web 29 and lever 40 at the hollow rivet 39. With the friction pad 33 in full frictional engagement with brake drum 20, further pivoting of lever 75 causes the pin to move the composite strut 70 and the lower end of web 30 to the right, fully engaging friction pad 34 with brake drum 20.

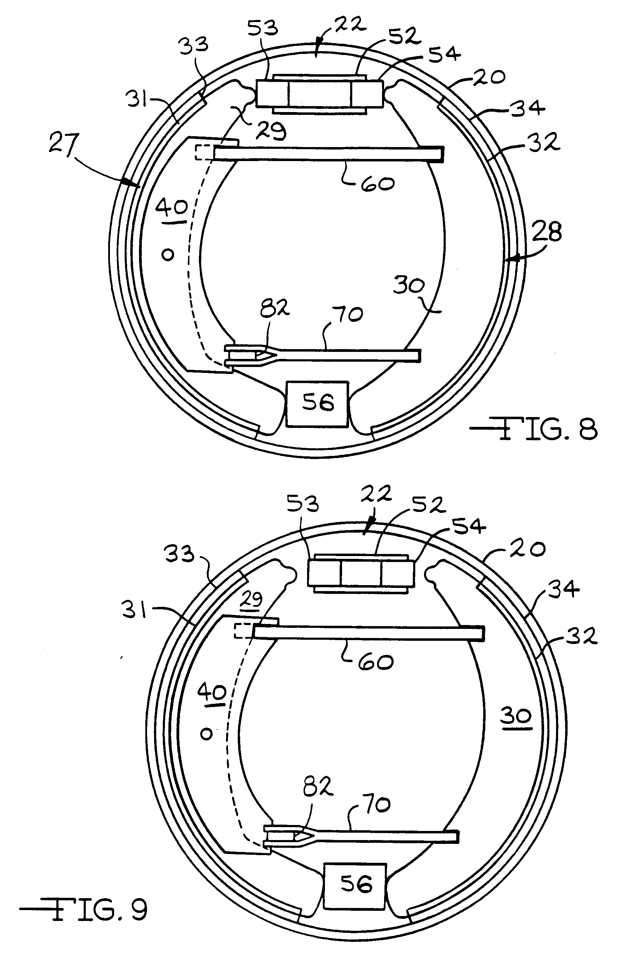

In Figure 9, the hydraulic service brake is shown as having been released while the mechanical parking brake remains applied. Thus pistons 53 and 54 have retracted into actuator 52, however the rest of the parts are in the same activated positions as shown in Figure 8.

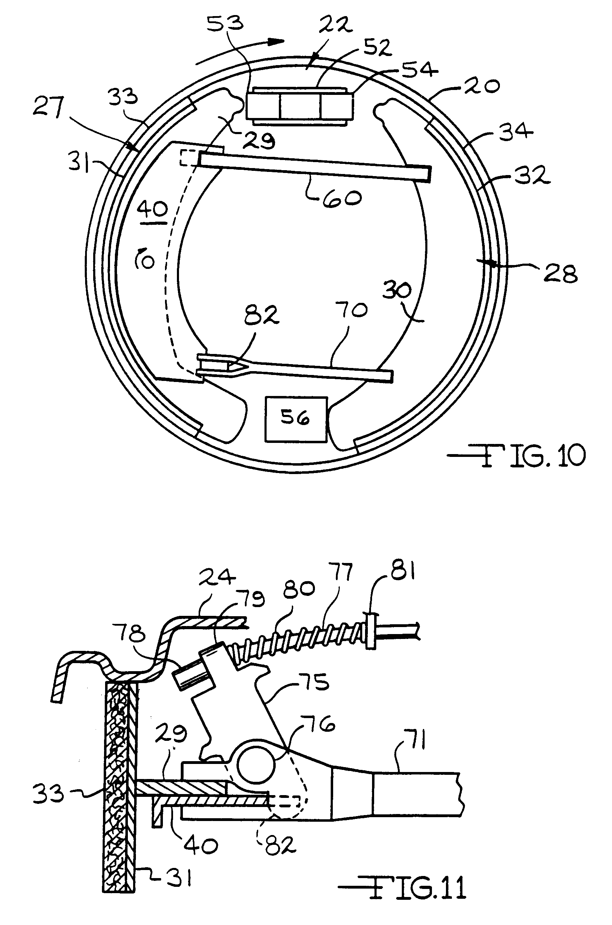

Figure 10 illustrates action of the mechanical parking brake when the vehicle tends to move towards the right thereby tending to rotate brake drum 20 clockwise. Upon clockwise rotation of drum 20 brake shoe assembly 27, which is maintained in contact with drum 20 by the force applied to lever 40 by struts 60 and 70 and hence to the shoe 27 via the pivot 35, 39, is dragged along with drum 20 because of its frictional engagement therewith. This imposes an additional axial force upon adjusting strut 60 forcing brake shoe assembly 28 into tighter frictional engagement with drum 20 thus affecting a duo-servo mechanical parking brake action.

It will be appreciated that a similar duo-servo action is generated on brake shoe 27 by shoe 28 should the drum move in the opposite anti-clockwise sense when the parking brake is applied.

It will be seen from the above that the present invention provides a drum brake assembly 22 having a leading/trailing hydraulic service brake and a mechanical duo-servo parking brake which is of a particularly compact and economical construction.

The provision of a single pivoting lever 40 to connect the struts 60 and 70 ensures that lost motion in the connection between struts 60 and 70 is minimised ensuring a ready transfer of force from brake actuating lever 75 through struts 70 and 60 and lever 40 to both brake shoes when the parking brake is applied and also ensure efficient duo-servo operation when the parking brake alone is operational.

Also by mounting the single lever 40 about an intermediate pivot on shoe 27, the size of the central opening between the shoes 27 and 28 is maximised (this central opening is further maximised by virtue of the arcuate shape of lever 40) to accommodate larger diameter axles, etc.

It will also be apparent that further economies and simplification of assembly of the brake are achieved if the lever 40 is pivoted on the pin 35 which mounts the associated shoe 27.

## Claims

1. A drum brake assembly (22) having a leading/trailing service brake and a duo-servo parking and emergency brake, the brake assembly comprising a backing plate (24), first and second opposed arcuate brake shoes (27, 28) supported relative to said backing plate and movable outwardly into frictional engagement with an associated brake drum (20) upon actuation of either the service brake or the parking and emergency brake, an hydraulic actuator (52) secured relative to said backing plate and disposed between and engageable with a first pair of adjacent ends of said brake shoes for hydraulically actuating the service brake, a rotation preventing abutment (56) secured relative to said backing plate and disposed between and engageable with a second pair of adjacent ends of said brake shoes, each of said first and second brake shoes including an arcuate table (31, 32) for supporting a friction pad (33, 34) and a web (29, 30) connected to said table, a pivot lever (40) pivotally supported relative to said first brake shoe (27) and operatively coupled to exert an outward force on said first brake shoe when the parking and emergency brake is mechanically actuated, strut means (60) disposed adjacent said hydraulic actuator and including one end coupled to said second brake shoe (28) and an opposite end coupled to one end of said pivot lever, parking and emergency brake actuating means (75, 76, 77) carried by said brake assembly for mechanically actuating said pivot lever to urge said first brake shoe outwardly into engagement with the brake drum and thereby initiating duo-servo actuation of the parking and emergency brake through said strut means, and hold down means (35, 39, 46, 48) for securing said first brake shoe (27) to said backing plate, characterised in that said hold down means also pivotally secures said pivot lever (40) to said web (29) of said first brake shoe (27).

2. The drum brake assembly according to claim 1 characterised in that said web (29) of said first brake shoe (27) is provided with an aperture (37) formed intermediate the ends thereof, that said pivot lever (40) is provided with an aperture (41) formed intermediate the ends thereof and that said hold down means extends through said apertures (37, 41) of said web (29) and said pivot lever (40).

3. The drum brake assembly according to claim 2 characterised in that said hold down means includes a hollow sleeve (39) which extends through said apertures of said web of said first brake shoe and said pivot lever to secure said first brake shoe and said pivot lever to said backing plate.

4. The drum brake assembly according to claim 1 characterised in that said strut means includes means for automatically adjusting the effective length thereof in response to a predetermined amount of wear of said brake shoes.

5. The drum brake assembly according to claim 1 characterised in that said parking and emergency brake actuating means includes a pivotally mounted actuating lever (75) and that said actuating lever has a cable (77) connected thereto for actuating the mechanical parking and emergency brake.

6. The drum brake assembly according to claim 1 characterised in that a further strut means (70) is disposed adjacent said rotation preventing abutment (56) and includes one end coupled to said second brake shoe (28) and an opposite end coupled to an opposite end of said pivot lever (40).

## Patentansprüche

1. Trommelbremsenanordnung (22) mit einer auflaufenden/ablaufenden Betriebsbremse und einer Duo-Servo-Park- und Notbremse, wobei die Bremsenanordnung aufweist: ein Bremsschild (24), einen ersten und zweiten gekrümmten Bremsbacken (27,28), die gegenüberliegend angeordnet sind und relativ zum Bremsschild abgestützt und bei Betätigung entweder der Betriebsbremse oder der Park- und Notbremse nach außen in Reibanlage mit einer zugehörigen Bremstrommel (20) bewegbar sind, eine hydraulische Betätigungsvorrichtung (52), die relativ zum Bremsschild festgelegt ist und zwischen einem ersten Paar benachbarter Enden der Bremsbacken angeordnet und mit diesen in Eingriff rückbar ist, um die Betriebsbremse hydraulisch zu betätigen, einem Drehsicherungsanschlag (56), der relativ zu dem Bremsschild festgelegt ist und zwischen einem zweiten Paar benachbarter Enden der Bremsbacken angeordnet und mit diesen in Eingriff rückbar ist, wobei jeder der beiden Bremsbacken eine gekrümmte Tragfläche (31,32) zum Abstützen eines Reibbelages (33,34) und einen mit der Tragfläche verbundenen Steg (39, 30) aufweist, einen Schwenkhebel (40), der relativ zu dem ersten Bremsbacken (27) schwenkbar gelagert und funktionsmäßig so gekoppelt ist, daß er eine auswärts gerichtete Kraft auf den ersten Bremsbacken ausübt, wenn die Park- und Notbremse mechanisch betätigt wird, Strebenmittel (60), die angrenzend an der hydraulischen Betätigungsvorrichtung angeordnet sind und ein mit dem zweiten Bremsbacken (28) verbundenes Ende und ein mit einem Ende des Schwenkhebels verbundenes gegenüberliegendes Ende umfassen, Betätigungsmittel (75,76,77) für die Park- und Notbremse, die von der Bremsenanordnung getragen werden, um den Schwenkhebel mechanisch zu betätigen und dadurch den ersten Bremsbacken nach außen in Anlage mit der Bremstrommel zu drücken und hierdurch die Duo-Servo-Betätigung der Park- und Notbremse durch die Strebenmittel einzuleiten, und Niederhaltemittel (35, 39, 46, 48) zum Befestigen des ersten Bremsbackens (27) an dem Bremsschild, dadurch gekennzeichnet, daß die Niederhaltemittel außerdem den Schwenkhebel (40) an dem Steg (29) des ersten Bremsbackens (27) schwenkbar befestigen.

2. Trommelbremsenanordnung nach Anspruch 1, dadurch gekennzeichnet, daß der Steg (29) des ersten Bremsbackens (27) mit einer Öffnung (37) versehen ist, die zwischen seinen Enden gebildet ist, daß der Schwenkhebel (40) mit einer Öffnung (41) versehen ist, die zwischen seinen Enden gebildet ist und daß die Niederhaltemittel durch die Öffnungen (37, 41) des Steges (29) und des Schwenkhebels (40) verlaufen.

3. Trommelbremsenanordnung nach Anspruch 2, dadurch gekennzeichnet, daß die Niederhaltemittel eine hohle Hülse (39) umfassen, die durch die Öffnungen des Steges des ersten Bremsbackens und des Schwenkhebels verläuft, um den ersten Bremsbacken und den Schwenkhebel an dem Bremsschild festzulegen.

4. Trommelbremsenanordnung nach Anspruch 1, dadurch gekennzeichnet, daß die Strebenmittel Nachstellmittel zum selbsttätigen Nachstellen der wirksamen Länge derselben in Abhängigkeit von einer vorgegebenen Abnutzung der Bremsbakken enthalten.

5. Trommelbremsenanordnung nach Anspruch 1, dadurch gekennzeichnet, daß die Betätigungsmittel der Park- und Notbremse einen schwenkbar gelagerten Betätigungshebel (75) umfassen und daß mit dem Betätigungshebel ein Kabel (77) verbunden ist, um die mechanische Park- und Notbremse zu betätigen.

6. Trommelbremsenanordnung nach Anspruch 1, dadurch gekennzeichnet, weitere Strebenmittel (70) angrenzend an den Drehsicherungsanschlag (56) angeordnet sind und ein mit dem zweiten Bremsbacken (28) verbundenes Ende und ein mit einem gegenüberliegenden Ende des Schwenkhebels (40) verbundenes gegenüberliegendes Ende aufweisen.

## Revendications

1. Ensemble de frein à tambour (22) ayant un frein de service primaire/secondaire et un frein de stationnement et de secours à double assistance, l'ensemble de frein comprenant un plateau (24), des première et seconde mâchoires de frein en forme d'arc opposé (27, 28) supportées par rapport au plateau et déplaçables vers l'extérieur en engagement de frottement avec un tambour de frein associé (20) sur actionnement soit du frein de service, soit du frein de stationnement et de secours, un vérin hydraulique (52) fixé par rapport au plateau et disposé entre et engageable avec une première paire des extrémités contigues des mâchoires de frein pour actionner hydrauliquement le frein de service, une butée empêchant la rotation (56) fixée par rapport au plateau et disposée entre et engageable avec une seconde paire d'extrémités contigues des mâchoires de frein, chacune des première et seconde mâchoires de frein comportant une table en forme d'arc (31, 32) pour supporter une plaquette de frein (33, 34) et un plat (29, 30) raccordé à la table, un levier pivotant (40) supporté à pivoter par rapport à la première mâchoire de frein (27) et couplé de manière fonctionnelle pour exercer une force vers l'extérieur sur la première mâchoire de frein lorsque le frein de stationnement et de secours est mécaniquement actionné, un moyen de barre comprimée (60) disposé contigu au vérin hydraulique et comportant une extrémité couplée à la seconde mâchoire de frein (28) et une extrémité opposée couplée à une extrémité du levier pivotant, un moyen d'actionnement de frein de stationnement et de secours (75, 76, 77) supporté par l'ensemble de frein pour actionner mécaniquement le levier pivotant pour pousser la première mâchoire de frein vers l'extérieur en engagement avec le tambour de frein et initier de ce fait la double action d'assistance du frein de stationnement et de secours par l'intermédiaire du moyen de barre comprimée, et un moyen de blocage (35, 39, 46, 48) pour fixer la première mâchoire de frein (27) au plateau, caractérisé en ce que le moyen de blocage fixe également de manière pivotante le levier pivotant (40) au plat (29) de la première mâchoire de frein (27).

2. Ensemble de frein à tambour selon la revendication 1, caractérisé en ce que le plat (29) de la première mâchoire de frein (27) est prévue avec une ouverture (37) formée entre ses extrémités, en ce que le levier pivotant (40) est prévu avec une ouverture (41) formée entre ses extrémités et en ce que le moyen de blocage se prolonge à travers les ouvertures (37, 41) du plat (29) et du levier pivotant (40).

3. Ensemble de frein à tambour selon la revendication 2, caractérisé en ce que le moyen de blocage vers le bas comporte un manchon creux (39) qui se prolonge à travers les ouvertures du plat de la première mâchoire de frein et du levier pivotant pour fixer la première mâchoire de frein et le levier pivotant au plateau.

4. Ensemble de frein à tambour selon la revendication 1, caractérisé en ce que le moyen de barre comprimée comporte un moyen pour ajuster automatiquement la longueur effective de celui-ci en réponse à une quantité prédéterminée d'usure des mâchoires de frein.

5. Ensemble de frein à tambour selon la revendication 1, caractérisé en ce que le moyen d'actionnement du frein de stationnement et de secours comporte un levier d'actionnement monté à pivoter (75) et en ce que le levier d'actionnement comporte un câble (77) raccordé à celui-ci pour actionner le frein de stationnement et de secours mécanique.

6. Ensemble de frein à tambour selon la revendication 1, caractérisé en ce qu'un autre moyen de barre comprimée (70) est disposé contigu à la butée empêchant la rotation (56) et comporte une extrémité couplée à la seconde mâchoire de frein (28) et une extrémité opposée couplée à une extrémité opposée du levier pivotant (40).
